# FASCICULE DE BREVET EUROPEEN

(11) **EP 0 647 508 B1**
(45) Date de publication et mention de la délivrance du brevet: **30.07.1997**
(21) Numéro de dépôt: 94402232.6
(22) Date de dépôt: 05.10.1994
(51) Int. Cl.: B25J 15/06, B25J 17/02, B62D 65/00

(54) **Poste de montage d'un siège de véhicule à l'intérieur de l'habitacle**
Vorrichtung zum Einbau eines Sitzes in die Karosserie eines Automobils
Device for assembling a seat in a motor vehicle compartment

(30) Priorité: 12.10.1993 FR 9312112
(43) Date de publication de la demande: 12.04.1995
(73) Titulaire: RENAULT AUTOMATION, 92100 Boulogne-Billancourt (FR)
(72) Inventeur: Dupuis, Claude, F-78620 L'Etang la Ville (FR)
(74) Mandataire: Robert, Jean-Pierre

(56) Documents cités:
- EP-A- 0 410 833
- EP-A- 0 534 182
- EP-A- 0 546 444
- FR-A- 2 617 078
- GB-A- 2 191 467

## Description

La présente invention concerne un poste d'assemblage d'un siège de véhicule à la carrosserie de ce dernier mettant en oeuvre un robot de manipulation du siège depuis un emplacement d'attente jusqu'à ses moyens de fixation dans l'habitacle.

La mise en place d'un siège de véhicule, notamment un siège avant, dans l'habitacle est actuellement réalisée au moyen de robots de manutention appartenant à un poste de travail où parviennent d'une part un convoyeur d'amenée des sièges et d'autre part un convoyeur d'amenée des caisses de véhicules à équiper, voir par exemple EP-A1-0 546 444.

L'interface entre un siège et la caisse d'un véhicule qui le reçoit est constitué par la structure de coulissement des glissières du siège qui, portée par le siège en partie inférieure, doit être mise en correspondance avec les moyens de fixation que porte la caisse du véhicule.

Jusqu'à présent la préhension du siège par le robot est réalisée au niveau de cette structure inférieure à partir d'une position où elle est repérée dans le référentiel du poste de travail jusqu'à des moyens d'accueil appartenant à la caisse qui sont eux-mêmes dans une position connue dans le référentiel du poste.

L'un des inconvénients de cette manière de procéder réside dans l'accès mal aisé de cette structure inférieure qui demande de pourvoir le robot d'un outillage de préhension particulier, à glisser sous le siège, ce qui constitue une augmentation de l'encombrement général du siège à mettre en place. Cette augmentation d'encombrement est une contrainte réduisant les possibilités de mouvement du robot à l'intérieur du volume déterminé de l'habitacle, voire prohibant, dans des espaces très confinés, l'utilisation d'un robot pour le montage des sièges. On mentionnera également la contrainte que constitue la nécessité de prévoir en extrémité du robot un outil spécialisé adapté à chaque siège. Cette contrainte est importante notamment pour ce qui concerne la flexibilité d'un poste de travail destiné à traiter plusieurs types ou modèles de véhicules.

La présente invention entend remédier à ces inconvénients en proposant un poste d'assemblage des sièges d'un véhicule à la caisse de ce dernier, dans lequel le préhenseur robotisé n'ajoute pas à l'encombrement du siège et constitue un outil universel susceptible de traiter n'importe quel siège.

A cet effet l'invention a donc pour objet un poste de montage pour un siège de véhicule à l'intérieur de l'habitacle, le siège comportant une structure inférieure d'attelage à la caisse du véhicule, le poste comportant quant à lui un emplacement d'attente approvisionné en sièges par un premier convoyeur, un emplacement de référence approvisionné en caisses de véhicule par un second convoyeur, et un robot de transfert de sièges depuis l'emplacement d'attente vers l'emplacement de référence des caisses de véhicule qui comporte un préhenseur d'extrémité constitué par deux caissons d'aspiration dont les faces actives sont contenues dans des plans sensiblement perpendiculaires, supportés par une liaison déformable sur une structure de soutien articulée à l'extrémité du bras de robot.

Ces deux caissons peuvent être placés dans l'angle que forment le dossier et l'assise d'un siège, épouser étroitement la surface de la garniture à cet endroit et être fermement maintenus contre ce siège lors de l'application d'une dépression dans leur volume intérieur. On s'est en effet rendu compte que la garniture en mousse qui constitue les sièges actuellement ainsi que les textiles qui les revêtent sont des matériaux qui possèdent une grande perte de charge si bien que la dépression créée dans chacun des caissons peut engendrer une force importante d'aspiration, en tout cas suffisamment grande pour supporter le poids et les inerties du siège lors de sa manipulation par un robot. En outre, cette aspiration tend à créer une structure relativement solide au voisinage de la face active des caissons d'aspiration et diminue très nettement le caractère déformable des garnitures de sièges si bien que lorsque le siège est ainsi pris en charge par un tel préhenseur, il constitue une unité rigide avec ce préhenseur dont les caractéristiques dimensionnelles ne varient pas au cours du transfert du siège.

Bien entendu la prise en charge du siège par le robot comprend un degré d'incertitude dimensionnelle qui dépend essentiellement de la position du siège à l'emplacement d'attente du poste et de la réaction de déformation des garnitures sous l'effet de l'aspiration du préhenseur. Le premier facteur peut être facilement contrôler pour le contenir dans des limites acceptables. Le second facteur est en revanche difficile à maîtriser si bien que, selon l'invention, le poste comporte une station intermédiaire entre l'emplacement d'attente des sièges et l'emplacement de référence des caisses, pour mesurer la position de la structure inférieure d'attelage du siège par rapport au robot. Cette mesure permet de déterminer avec précision la trajectoire du robot et notamment la fin de cette trajectoire pour que le siège arrive en parfaite concordance avec les moyens de son attelage présents dans la carrosserie du véhicule. On rappellera en effet que ces moyens sont repérés dans le référentiel du robot, c'est-à-dire du poste et que, de ce fait, la mesure de la position relative du siège et du robot est suffisante pour corriger l'incertitude dimensionnelle lors de la prise.

D'autres caractéristiques et avantages de l'invention ressortiront de la description d'un exemple de réalisation donné ci-après.

Il sera fait référence aux dessins annexés dans lesquels :

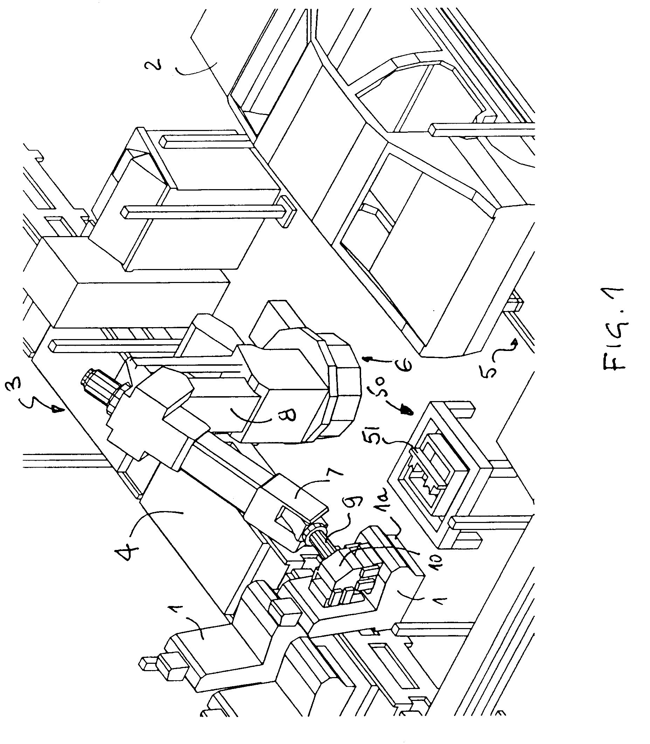

- la figure 1 est une vue schématique du poste de montage selon l'invention,
- la figure 2 est une vue extérieure en perspective du préhenseur mis en oeuvre dans ce poste,
- la figure 3 est une vue éclatée des organes mis en oeuvre dans la liaison compliante du caisson d'aspiration et de son support formant le préhenseur du robot.

Le poste d'assemblage d'un siège 1 à l'intérieur de l'habitacle d'un véhicule 2 comporte un premier convoyeur 3 d'amenée des sièges 1 à un emplacement d'attente 4 et un second convoyeur 5 d'amenée des carrosseries 2 à un emplacement de référence dans lequel chaque carrosserie et en particulier les moyens en attente qu'elle porte pour accueillir les sièges, sont dans une position déterminée par rapport au référentiel du poste.

Dans ce référentiel géométrique du poste, un robot 6 évolue de manière connue, ce robot présentant un bras 7 articulé sur un montant 8 autour d'un axe horizontal, ce bras 7 pouvant tourner autour d'un axe longitudinal et son extrémité est pourvue d'un poignet 9 articulé au bras 7 autour d'un axe transversal et pouvant tourner autour de son axe longitudinal propre. Le nombre de ces degrés de liberté connu peut d'ailleurs être augmenté : le bras 7 peut être télescopique et son attelage au support 6 peut également être variable en altitude.

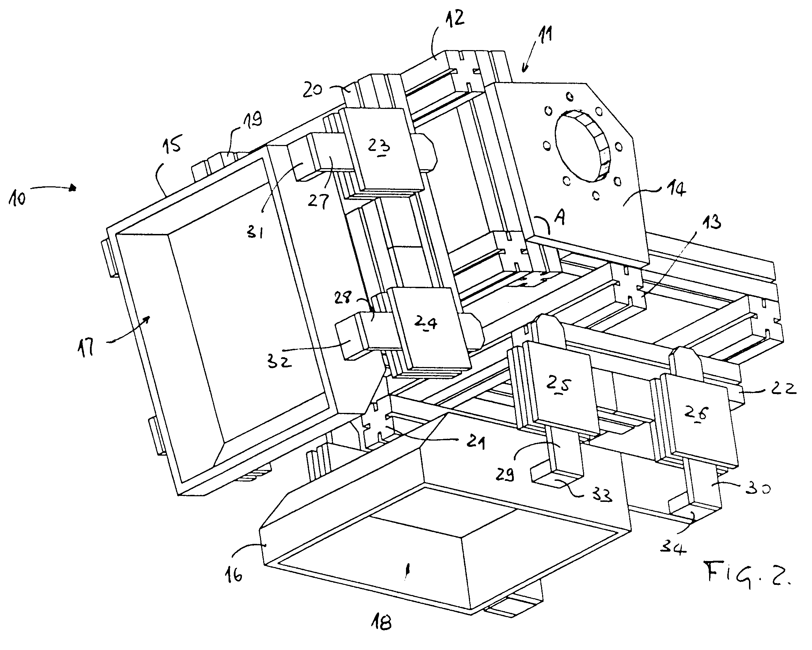

A l'extrémité du poignet 9 le robot comporte un préhenseur 10 représenté plus en détail à la figure 2. Il comporte une structure rigide 11 ici formée de deux cadres 12 et 13 réunis entre eux par des goussets latéraux 14 (un seul de ces goussets est représenté à la figure). Chacun des cadres 12 et 13 se comporte comme une platine de fixation pour des caissons d'aspiration 15, 16. Le caisson 15 porté par le cadre 12 présente, une ouverture 17 contenue dans un plan sensiblement parallèle au plan de fixation que définit le cadre 12 si le caisson n'est soumis à aucune sollicitation extérieure. De même le caisson 16 définit une ouverture 18 qui est sensiblement parallèle au cadre 13 lorsque le caisson ne subit aucun effort extérieur. Les plans contenant les ouvertures 17 et 18 forment entre eux un dièdre qui est semblable au dièdre que forment les cadres 12 et 13 et dont l'angle est sensiblement droit comme par exemple illustré par l'angle A du gousset 14 sur la figure 2. Cet angle est celui que l'on rencontre communément dans un siège de voiture entre le dossier du siège et son assise. Comme il existe néanmoins des variations possibles d'un siège à l'autre et d'un modèle à l'autre, il est nécessaire d'adopter une liaison déformable entre les caissons 15 et 16 et les cadres 12 et 13 dont les plans constituent le dièdre de référence.

En effet, les ouvertures 17 et 18 des caissons 15 et 16 d'aspiration sont destinées à être appliquées contre respectivement le dossier et l'assise du siège, les bords des ouvertures 17 et 18 devant reposer sur la totalité de leur longueur contre le dossier et l'assise. L'effort d'application peut être réglé de manière à écraser la garniture souple qui constitue le dossier et l'assise du siège afin d'obtenir ce contact sur la totalité de la longueur des bords encadrant les ouvertures 17 et 18 mais, dans le but de réduire cet effort d'application, il est préférable que les caissons 15 et 16 aient une faculté à s'auto-incliner pour s'adapter à l'inclinaison moyenne du dossier par rapport à l'assise du siège à manipuler. Cette possibilité d'adaptation se traduit par une liaison déformable des caissons 15 et 16 aux cadres 12 et 13.

Plus précisément, on remarque à la figure 2 l'existence au-dessus des cadres 12 et 13 de traverses 19, 20, 21 et 22 qui portent chacune deux blocs de guidage - tels que 23 et 24, pour la traverse 20 et 25, 26 pour la traverse 22 - des coulisseaux 27, 28, 29, 30 solidaires des caissons 15 et 16 (il est mis en oeuvre quatre blocs de coulissement et quatre coulisseaux par caisson). La liaison de chaque coulisseau tels que 27, 28, 29, 30 au caisson correspondant est réalisée au moyen d'un bloc en élastomère 31, 32, 33, 34 conférant une certaine souplesse élastique à cette liaison.

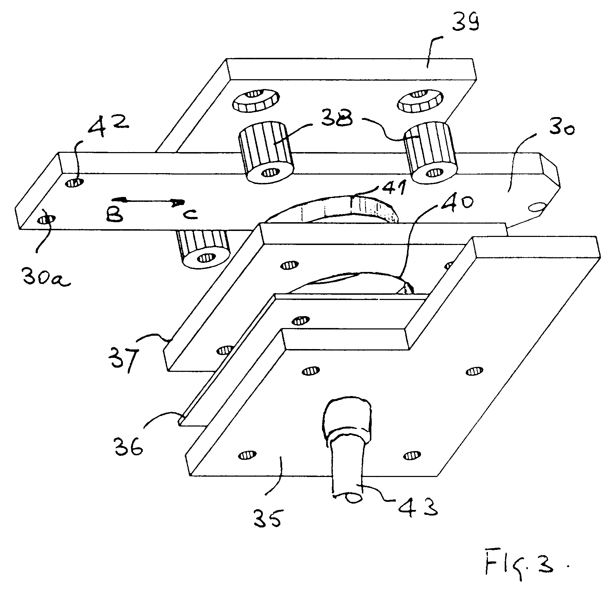

Ainsi, lorsque le préhenseur 10 est appliqué dans l'angle d'un siège de véhicule automobile, et que le vide ou une dépression règne à l'intérieur des caissons 15 et 16, ceux-ci ont tendance à prendre une position naturelle contre respectivement le dossier et l'assise du siège en modifiant leur position par rapport à leur position de repos dans laquelle le plan des ouvertures 17 et 18 est parallèle au plan des cadres de support 12 et 13. La liaison des caissons aux cadres au moyen des coulisseaux et des blocs de coulissement est alors immobilisée par un verrou dont un mode de réalisation est illustré à la figure 3.

A cette figure, on a représenté en vue éclatée les constituants d'un bloc de coulissement et d'un coulisseau.

Le bloc de coulissement comporte une première plaque 35 qui est destinée à être fixée d'une manière non explicitée sur la figure, à l'une des traverses 19, 20, 21 ou 22 que portent les cadres 12, 13. A cette plaque 35 sont rapportées successivement une membrane élastiquement déformable 36, une seconde plaque 37, des entretoises 38 et une troisième plaque 39. La membrane 36 est en élastomère et constitue une paroi déformable pour un alésage 40 que comporte la plaque 37. Les entretoises 38 servent à maintenir écartée, lorsque l'empilement est serré sur la plaque 35, la plaque 39 de la plaque 37 afin de ménager entre elles un espace suffisant pour le logement du coulisseau 30 et guider le mouvement de ce dernier entre elles selon les flèches B et C. En outre, un patin libre 41 cylindrique se trouve logé à l'intérieur de l'alésage 40 lorsque l'empilement est réalisé. L'extrémité 30a du coulisseau est celle qui porte au moyen d'orifices de fixation 42, le bloc d'élastomère 34 pour sa liaison à l'un des caissons.

La plaque 35 comporte un orifice traversant permettant de raccorder un tube 43 par lequel il est possible d'appliquer sur la membrane 36 une pression pneumatique qui tend à la déformer à l'intérieur de l'alésage 40 et à pousser le patin 41 contre le coulisseau 30 et ce dernier contre la plaque 39 réalisant ainsi un frein de blocage du coulisseau.

Il est aisé de comprendre au vu de ces figures, comment le robot 3 peut se saisir d'un siège tel que 1 disposé à l'emplacement 4. Brièvement, on rappellera que le robot vient placer le préhenseur 10 dans l'angle du siège, chacun des coulisseaux de liaison des caissons à la structure du préhenseur étant déverrouillé. Le volume intérieur de ces caissons est alors placé en dépression au moyen d'une centrale d'aspiration non représentée sur les dessins, ce qui applique chacun des caissons contre le siège, l'aspiration étant maintenue en permanence alors que, par chacun des huit conduits tels que 43, on bloque les caissons sur leurs cadres 12, 13 de référence. On a remarqué à propos du rôle de l'aspiration, que celle-ci permettait d'engendrer une force de sustentation suffisante des sièges grâce au fait que la garniture de revêtement de ces derniers et le textile qui la recouvre, présentent une perte de charge à l'écoulement du gaz aspiré. Comme en général les sièges sont livrés au poste d'attente 4 avec une housse en matière plastique, on aura prévu de percer ce film pour qu'il ne constitue pas un écran étanche à l'aspiration et empêche la préhension correcte du siège qui, sans ces trous, serait suspendu au robot par le film.

Il existe une grande dispersion de cotes entre la structure la de soubassement d'un siège qui comporte les pièces de référence, c'est-à-dire les coulisses et glissières du siège à fixer à la carrosserie de l'automobile et sa garniture, du fait même de la nature du matériau de garniture et de sa déformabilité plus ou moins constante. Il résulte de cet état de chose que le siège pris par le robot à l'emplacement d'attente 4 n'est pas repéré de manière précise dans le système de référence du poste de travail où le préhenseur, sa trajectoire et notamment l'extrémité de sa trajectoire, et les moyens de fixation du siège à la carrosserie portés par la carrosserie sont repérés. Il est donc nécessaire de procéder à un ajustement et pour ce faire le poste selon l'invention comporte une station 50 par laquelle on mesure la position relative du siège et du robot.

Il existerait de nombreux modes de réalisation de cette station 50. Celui qui a été choisi comporte une structure 51 qui peut recevoir le soubassement la du siège et qui forme une butée dans les trois directions X, Y et Z du mouvement du siège lorsqu'il est engagé dans la structure 51 et manoeuvré par le robot au niveau de cette station 50. Ainsi, lorsque le siège est arrêté dans cette position fixe et bien repérée dans le système de référence du poste, on mesure la position atteinte par les différents axes du robot et en fonction de cette mesure on corrige en conséquence l'extrémité de la trajectoire du siège imprimé par le robot entre la station 50 et le véhicule 2 pour que cette extrémité de trajectoire coïncide parfaitement avec les moyens de fixation du siège à attente dans le véhicule. Une autre méthode consisterait à placer le robot dans une position fixe par rapport à la structure 51 mobile de mesure de la station 50 et, à partir d'une position d'origine de cette structure mobile 51 en relation avec la position fixe du robot, de mesurer les déplacements en X, Y, Z de cette structure 51 imprimés par le siège lorsque le robot a atteint cette position fixe prédéterminée pour, de la même manière, corriger la fin de la trajectoire que doit atteindre le robot pour la mise en place du siège dans le véhicule.

L'invention présente des avantages importants par rapport aux robots habituellement utilisés et aux préhenseurs destinés à coopérer avec des soubassements de sièges la. En effet, l'encombrement du préhenseur est pratiquement totalement masqué à l'intérieur de l'encombrement du siège lui-même si bien qu'il est possible d'automatiser des opérations d'introduction de sièges au travers de petites ouvertures ou dans des espaces confinés comme c'est le cas dans les petits véhicules. Il est également possible, dans un même poste d'assemblage, de procéder au montage de sièges différents sur des véhicules différents puisque ce montage ne demande pas de changement d'outillage mais simplement des changements du programme à suivre par le robot, changements qui sont très rapides à opérer.

## Revendications

1. Poste de montage pour un siège (1) à l'intérieur de l'habitacle d'un véhicule (2), le siège comportant une structure inférieure (1a) d'attelage à la caisse du véhicule, le poste comportant un emplacement d'attente (4) approvisionné en sièges (1) par un premier convoyeur (3), un emplacement de référence approvisionné en caisses (2) de véhicules par un second convoyeur (5), un robot (6) de transfert de sièges (1) depuis l'emplacement d'attente (4) vers l'emplacement de référence des caisses (2), le robot (6) comportant un préhenseur (10) d'éxtrémité, caractérisé en ce que le préhenseur (10) d'extrémité est constitué par deux caissons (15) et (16) d'aspiration dont les faces actives (17, 18) sont contenues dans des plans sensiblement perpendiculaires, les caissons étant supportés par une liaison déformable sur une structure (12, 13, 14) de soutien articulée à l'extrémité (9) du bras de robot.

2. Poste de montage selon la revendication 1, caractérisé en ce qu'il comporte une station (50) de mesure de la position de la structure inférieure (1a) du siège par rapport au robot (6).

3. Poste selon la revendication 1 ou la revendication 2, caractérisé en ce que la structure de soutien (12, 13, 14) définit deux faces de référence, formant un dièdre saillant à chacune desquelles est attelé un caisson (15, 16) d'aspiration au moyen d'une pluralité de coulisseaux (27 à 30) sensiblement perpendiculaires au plan de la surface correspondante, chaque coulisseau étant monté glissant par rapport à la structure (12, 13, 14) et attelé élastiquement au caisson (15, 16) tandis qu'un verrou commandé permet l'immobilisation du coulisseau par rapport à la structure.

4. Poste de montage selon la revendication 3, caractérisé en ce que le verrou comporte un patin (41) de pincement du coulisseau (30) contre son guide (39), commandé par une membrane (36) déformable pneumatiquement.

## Claims

1. A fitting station for fitting a seat (1) in the interior of the passenger compartment of a vehicle (2), the seat comprising a lower structure (1a) for fastening to the body of the vehicle, the station comprising a waiting location (4) supplied with seats (1) by a first conveyor (3), a reference location supplied with vehicle bodies (2) by a second conveyor (5), a robot (6) for transferring seats (1) from the waiting location (4) towards the reference location of the bodies (2), the robot (6) comprising an end gripper (10), characterised in that the end gripper (10) is formed by two suction cases (15) and (16) of which the active faces (17, 18) are contained in substantially perpendicular planes, the cases being supported by a deformable connection on a support structure (12, 13, 14) pivoted to the end (9) of the robot arm.

2. A fitting station according to claim 1 characterised in that it comprises a station (50) for measuring the position of the lower structure (1a) of the seat with respect to the robot (6).

3. A station according to claim 1 or claim 2 characterised in that the support structure (12, 13, 14) defines two reference faces forming a projecting dihedron, to each of which a suction case (15, 16) is fastened by means of a plurality of slides (27 to 30) which are substantially perpendicular to the plane of the corresponding surface, each slide being mounted slidably with respect to the structure (12, 13, 14) and elastically connected to the case (15, 16) while a controlled lock permits immobilisation of the slide with respect to the structure.

4. A fitting station according to claim 3 characterised in that the lock comprises a pad (41) for clamping the slide (30) against its guide (39), controlled by a pneumatically deformable diaphragm (36).

## Patentansprüche

1. Montageplatz zum Einbauen eines Sitzes (1) in eine Fahrzeugkarosserie (2), wobei der Sitz einen unteren Teil (1a) zum Verbinden mit der Fahrzeugkarosserie hat und der Montageplatz einen Wartestandort (4), dem mittels einer ersten Fördereinrichtung (3) Sitze (1) zugeführt werden, einen Referenzstandort, dem mittels einer zweiten Fördereinrichtung (5) Fahrzeugkarosserien (2) zugeführt werden, sowie einen Roboter (6) zum Transportieren der Sitze (1) von dem Wartestandort (4) zum Referenzstandort der Fahrzeugkarosserien (2) enthält, und wobei der Roboter (6) ein Greiforgan (10) hat, dadurch **gekennzeichnet**, daß das Greiforgan (10) zwei Saugkästen (15) und (16) enthält, deren aktive Seiten (17, 18) in im wesentlichen senkrecht Zueinander stehenden Ebenen liegen und die mittels einer verformbaren Verbindungseinrichtung an einer Halterungsstruktur (12, 13, 14) angebracht sind, die am Ende (9) des Roboterarmes angelenkt ist.

2. Montageplatz nach Anspruch 1, dadurch **gekennzeichnet**, daß er eine Station (50) zum Bestimmen der Position des unteren Teils (1a) des Sitzes relativ zum Roboter (6) enthält.

3. Montageplatz nach Anspruch 1 oder Anspruch 2, dadurch **gekennzeichnet**, daß die Halterungsstruktur (12, 13, 14) zwei Bezugsflächen definiert, die einen vorstehenden V-förmigen Dieder bilden und an denen jeweils ein Saugkasten (15, 16) mittels einer Vielzahl von Gleitstücken (27 bis 30) gelagert ist, die im wesentlichen senkrecht zur Ebene der zugehörigen Oberfläche stehen, wobei jedes Gleitstück relativ zur Struktur (12, 13, 14) gleitend gelagert und elastisch mit dem Kasten (15, 16) verbunden ist, während eine gesteuerte Sperrvorrichtung ein Arretieren des Gleitstückes relativ zur Struktur ermöglicht.

4. Montageplatz nach Anspruch 3, dadurch **gekennzeichnet**, daß die Sperrvorrichtung eine Scheibe (41) zum Anpressen des Gleitstückes (30) an dessen Führung (39) umfaßt, wobei die Scheibe (41) mit Hilfe einer pneumatisch verformbaren Membran (36) steuerbar ist.
